# EUROPÄISCHE PATENTANMELDUNG

(11) **EP 4 838 185 A1**
(43) Veröffentlichungstag der Anmeldung: **11.11.2026**
(21) Anmeldenummer: 25174195.5
(22) Anmeldetag: 05.05.2025
(51) Int. Cl.: G01G 23/00

(54) **WÄGEVORRICHTUNG MIT WÄGEZELLEN**

(71) Anmelder: Diebold Nixdorf Systems GmbH, 33106 Paderborn (DE)
(72) Erfinder: SCHÄFER, Oliver, 14621 Schönwalde-Glien (DE)
(74) Vertreter: Viering, Jentschura & Partner mbB Patent- und Rechtsanwälte

(57) **Zusammenfassung**

Die Erfindung betrifft eine Wägevorrichtung mit einer Objektaufnahmefläche und ein Verfahren zum Reduzieren von Messfehlern. Die Wägevorrichtung (2) weist auf eine Objektaufnahmefläche (4) zum Platzieren eines zu wiegenden Objektes (10), wobei eine einer Masse des Objektes (10) entsprechende Objektgewichtskraft auf die Objektaufnahmefläche (4) übertragbar ist, und mehrere mit der Objektaufnahmefläche gekoppelte Wägezellen (6.1, 6.2), wobei eine erste der Wägezellen (6.1) einen Schwellenwert aufweist, durch welchen Schwellenwert eine von der den Schwellenwert aufweisenden Wägezelle (6.1) maximal zu verarbeitende Gewichtskraft vorbestimmbar ist, und wobei eine zweite der Wägezellen mit einem über den Schwellenwert hinausgehenden Anteil der Objektgewichtskraft beaufschlagbar ist.

## Beschreibung

Die Erfindung betrifft eine Wägevorrichtung mit einer Objektaufnahmefläche und ein Verfahren zum Reduzieren von Messfehlern.

Bekannte Wägevorrichtungen weisen eine Objektaufnahmefläche auf, die mit einer Wägezelle gekoppelt sind. Ein zu wiegendes Objekt wird auf dieser Objektaufnahmefläche platziert, wodurch die Objektaufnahmefläche entsprechend der Gewichtskraft des Objektes verschoben bzw. deplatziert wird. Dies bewirkt eine Verformung der Wägezelle.

Eine solche Wägezelle ist üblicherweise ein elektromechanischer Messgrößenumformer zur Bestimmung einer Masse des Objektes. Mittels dieses Messgrößenumformers wird die vom zu wiegenden Objekt ausgeübte Gewichtskraft in ein elektrisches Signal umgeformt. Mit Hilfe von solchen Wägezellen lässt sich eine Masse bzw. eine Gewichtskraft bestimmen. Eine Auswerteeinheit der Wägevorrichtung verarbeitet dieses Signal so, dass die Masse des Objektes auf einer Ausgabeeinheit angezeigt bzw. anderweitig entsprechend des Zweckes der Wägevorrichtung verarbeitet wird.

Eine solche Wägezelle umfasst einen Federkörper und einen Dehnungsmessstreifen. Der Federkörper kann im Wesentlichen beispielhaft aus Aluminium, legiertem Stahl oder aus Edelstahl gebildet sein. Der Federkörper verformt sich durch die Belastung bzw. durch die auf die Wägezelle einwirkende vom zu wiegenden Objekt ausgehende Gewichtskraft. Der Dehnmessstreifen ist mit diesem Federkörper fest verbunden, beispielsweise verklebt. Das bedeutet, dass sich im Falle einer durch die Gewichtskraft des Objektes bedingten Streckung bzw. Stauchung des Materials des Federkörper der Dehnmessstreifen in entsprechender Weise ebenso verformt. Durch diese Verformung des Dehnmessstreifens ändert sich der Widerstand des Dehnmessstreifens. Mit Änderung des elektrischen Widerstandes ist demnach ein verändertes elektrisches Signal am Ausgang der Wägezelle messbar.

Mittels derartiger Wägevorrichtungen bestimmte Massen weisen Messfehler auf. Die Ursache solcher Messfehler sind bekanntermaßen beispielsweise Handhabungsfehler, das heißt Fehler im Umgang mit der Wägevorrichtung, oder Fertigungstoleranzen bei Herstellungsprozessen der Wägevorrichtung.

EP2373960B1 zeigt eine Wägevorrichtung mit einem System zum Reduzieren solcher Messfehler für den Fall, dass das zu wiegende Objekt über den Rand einer Wiegeplatte der Wägevorrichtung hinausragt und gegebenenfalls auf einer nicht zur Wiegeplatte gehörenden Fläche aufliegt. Zu diesem Zweck umfasst das System einen mit einer Steuereinrichtung gekoppelten Datenleser, der reflektiertes Licht im Randbereich der Wiegeplatte detektiert und demnach auswertet, ob eine das Wägen fehlerhaft beeinflussende Platzierung des Objektes vorliegt.

Zudem kann die Wägevorrichtung bzw. die Wägezelle weniger geeignete Messbereiche aufweisen. Das bedeutet, dass die Wägevorrichtung bzw. die Wägezelle Optimalmessbereiche aufweisen, für die die Genauigkeit hinsichtlich der zu ermittelnden Massen akzeptabel ist und folglich außerhalb eines solchen Optimalmessbereiches nicht akzeptabel ist.

US7841522B2 offenbart eine Wägevorrichtung umfassend zwei separate Waagen. Unabhängig voneinander wird die Masse eines Objektes auf diesen zwei Waagen bestimmt. Messfehler werden mittels einer solche Wägevorrichtung erkannt, wenn sich die auf der ersten dieser Waagen ermittelte Masse signifikant von der auf der zweiten dieser Waagen bestimmte Masse des Objektes unterscheidet.

Es wird eine Wägevorrichtung bereitgestellt, welche hinsichtlich der Genauigkeit der Messergebnisse und unabhängig eines Optimalmessbereiches einer Wägezelle akzeptable Messergebnisse bereitstellt. Ferner wird ein Verfahren zum Reduzieren von Messfehlern bei Wägevorrichtungen bereitgestellt.

Eine Wägevorrichtung weist eine Objektaufnahmefläche zum Platzieren eines zu wiegenden Objektes auf, wobei eine einer Masse des Objektes entsprechende Objektgewichtskraft auf die Objektaufnahmefläche übertragbar ist, und mehrere mit der Objektaufnahmefläche gekoppelte Wägezellen, wobei eine erste der Wägezellen einen Schwellenwert aufweist, durch welchen Schwellenwert eine von der den Schwellenwert aufweisenden Wägezelle maximal zu verarbeitende Gewichtskraft vorbestimmbar ist, und wobei eine zweite der Wägezellen mit einem über den Schwellenwert hinausgehenden Anteil der Objektgewichtskraft beaufschlagbar ist.

Ein Verfahren zum Reduzieren von Messfehlern bei Wägevorrichtungen weist die folgenden Verfahrensschritte auf:
Platzieren eines Objektes auf einer Objektaufnahmefläche, wobei eine einer Masse des Objektes entsprechende Objektgewichtskraft auf die Objektaufnahmefläche übertragen wird, wobei mehrere Wägezellen mit der Objektaufnahmefläche gekoppelt sind;
Vorbestimmen einer von einer ersten Wägezelle maximal zu verarbeitenden Gewichtskraft durch Festlegen eines Schwellenwertes für die erste Wägezelle, und
Beaufschlagen einer zweite der Wägezellen mit einem über den Schwellenwert hinausgehenden Anteil der Objektgewichtskraft.

Der Erfindung liegt die Erkenntnis zugrunde, dass als Bestandteil einer solchen Wägevorrichtung verwendete Wägezellen einen aufgrund technischer Gegebenheiten optimalen Messbereich in einem unteren Gewichtsbereich aufweisen, der durch einen geringen Messfehler geprägt ist. Oberhalb dieses unteren durch einen geringen Messfehler gekennzeichneten Gewichtsbereiches sind Messfehler signifikant erhöht. Begrenzbar ist dieser optimale Messbereich durch einen solchen Schwellenwert. In anderen Worten heißt das, dass der einzustellende Schwellenwert den bezüglich der Objektgewichtskraft höchsten Wert angibt, der von der betreffenden Wägezelle ausgegeben wird bzw. ausgebbar ist. Ein solcher Schwellenwert, der der einzelnen Wägezelle zuordenbar ist, kann sich an einem vorbekannten optimalen Messbereich dieser Wägezelle orientieren.

Der diesen Schwellenwert überschreitende Anteil der Objektgewichtskraft, ist - sofern das Objekt eine eine Überschreitung des Schwellenwertes bewirkende Masse aufweist - durch die zweite Wägezelle detektierbar und folglich ausgebbar. Abhängig vom gewünschten Messbereich der Wägevorrichtung und den einzelnen Schwellenwerten der Wägezellen ist bei der Auslegung der Wägevorrichtung eine für die Wägevorrichtung notwendige Anzahl von Wägezellen ermittelbar. Demnach ist der Schwellenwert jeder einzelnen Wägezelle vor einer Inbetriebnahme der Wägevorrichtung oder jederzeit, also beispielsweise vor einer einzelnen Wägung frei wählbar. Beispielsweise sind die Schwellenwerte der Wägezellen identisch, beispielsweise sind die Wägezellen baugleich.

Demnach ist jede einzelne einen solchen Schwellenwert aufweisende Wägezelle lediglich mit einem der Wägezelle zugeordneten Anteil der Objektgewichtskraft innerhalb des optimalen Messbereiches hinsichtlich einer Messung wirksam beaufschlagbar. Wirksam hinsichtlich der Messung beaufschlagbar bedeutet, dass eine solche Wägezelle maximal einen Anteil der Objektgewichtskraft zur Weiterverarbeitung signalisieren kann, der dem Schwellenwert der Wägezelle entspricht.

Im Folgenden wird die Erfindung anhand von Figuren näher erläutert. Es zeigen:
- Figur 1:: eine Wägevorrichtung;
- Figur 2:: eine schematische Anordnung von Wägezellen einer Wägevorrichtung;
- Figur 3:: eine schematische Darstellung der von einzelnen Wägezellen einer Wägevorrichtung detektierten Objektgewichtskraft in Abhängigkeit von der Objektmasse; und
- Figur 4:: ein die Funktionsweise der Wägevorrichtung darstellendes Blockdiagramm.

Bei einer Weiterbildung der Wägevorrichtung bilden die Wägezellen eine sequenzielle Kaskade. Dabei sind die zwei innerhalb der Kaskade unmittelbar nacheinander angeordnete Wägezellen derart miteinander verbunden, dass die bezüglich einer steigenden Objektgewichtskraft erstbeeinflusste dieser beiden unmittelbar nacheinander angeordneten Wägezellen bei einer ihrem Schwellenwert entsprechenden Objektgewichtskraft mit der zweiten dieser unmittelbar nacheinander angeordneten Wägezellen in Wirkverbindung tritt. Das bedeutet, dass die erstbeeinflusste dieser beiden unmittelbar in der Kaskade nacheinander angeordneten Wägezellen bis zum Schwellenwert voll belastet bzw. belastbar ist und erst bei höherer Objektgewichtskraft die zweite dieser unmittelbar nacheinander angeordneten Wägezellen durch die Objektgewichtskraft belastbar ist.

Bei einer Weiterbildung der Wägevorrichtung weist jede der Wägezellen einen solchen Schwellenwert auf. Demnach bestimmen die Anzahl der Wägezellen und deren Schwellenwerte die maximal mittels der Wägevorrichtung wägbare Masse des Objektes.

Bei einer Weiterbildung der Wägevorrichtung ist durch eine jede der Wägezellen ein Wägezellensignal generierbar und die Wägezellensignale sind an eine Auswerteeinheit zur Ermittlung der Masse des Objektes übermittelbar. Entsprechend sind die von jeder einen Schwellenwert aufweisenden Wägezelle ausgebbaren Anteile der Objektgewichtskraft zur Objektgewichtskraft kumulierbar. Die kumulierbaren von den einzelnen Wägezellen generierbaren/generierten und übermittelbaren/übermittelten Anteile der Objektgewichtskraft bilden die Objektgewichtskraft aus der beispielsweise durch einfache physikalische Gleichung die Masse des Objektes ermittelbar ist. In bekannt vereinfachter Rechnung ist die Objektgewichtskraft gleich dem Produkt aus Masse des Objektes und Erdbeschleunigung.

Darüber hinaus kann ein die Masse des Objektes repräsentierendes Gesamtsignal von der Auswerteeinheit an eine Ausgabeeinheit übermittelbar sein. Dies ermöglicht die weitere Verarbeitung bzw. Auswertung des Wertes der Objektmasse.

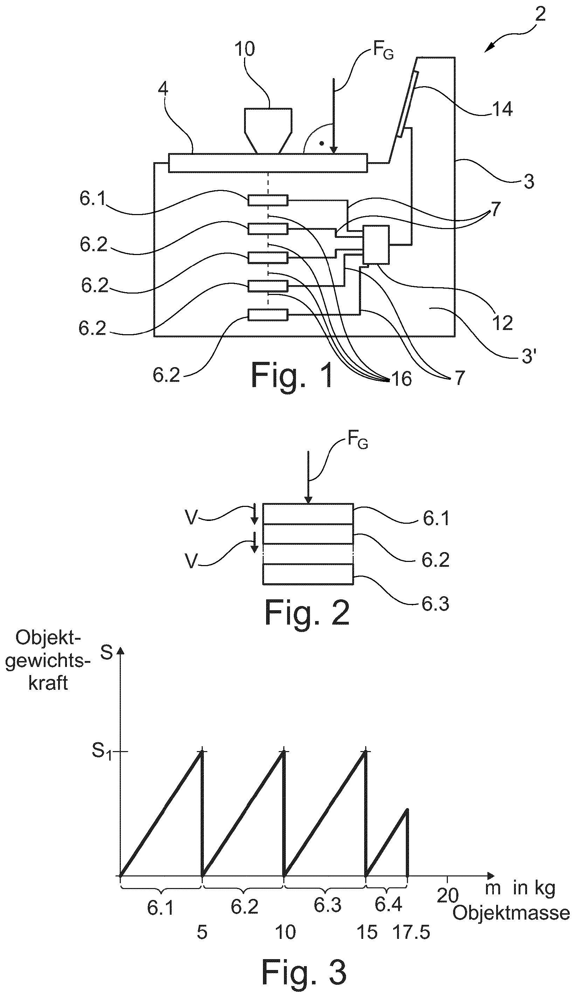

Figur 1 zeigt eine Wägevorrichtung 2. Die Wägevorrichtung 2 umfasst eine Objektaufnahmefläche 4, eine Vielzahl von Wägezellen 6.1, 6.2, eine Auswerteeinheit 12 und eine Ausgabeeinheit 14, wobei beispielhaft die Wägezellen 6.1, 6.2 und die Auswerteeinheit 12 in einem Innenraum 3' eines Gehäuses 3 der Wägevorrichtung 2 angeordnet sein können. Das Gehäuse 3 kann für einen Schutz der in seinem Innenraum 3' angeordneten Bestandteile der Wägevorrichtung 2 und/oder für eine Ausrichtung der Objektaufnahmefläche 4 bezüglich der durch Erdgravitation bedingten Schwerkraft ausgebildet sein. Beispielhaft ist die Ausrichtung der Objektaufnahmefläche 4 durch Stellschrauben an den Standelementen der Wägevorrichtung 2 beeinflussbar. Demnach kann eine solche Objektaufnahmefläche 4 senkrecht ihrer Ausrichtung und damit im Wesentlichen parallel der Lotrechten F_{G} beweglich gelagert sein. Die Ausgabeeinheit 14 ist beispielhaft als Display zum Ausgeben einer Masse eines Objektes 10 ausgebildet, welches Objekt 10 zur Bestimmung seiner Masse auf der Objektaufnahmefläche 4 platzierbar ist oder platziert werden kann.

Die Wägezellen 6.1, 6.2 sind in einer Kaskade, das heißt unmittelbar aufeinanderfolgend wirkverbunden angeordnet. Beispielhaft kann diese Wirkverbindung durch eine feinmechanische Anordnung realisiert sein. Entsprechend ihrer Verformung ist durch jede der Wägezellen 6.1, 6.2 ein separates Wägezellensignal generierbar. Jedes diese Wägezellensignale ist mittels Signalverbindungen 7 zur Auswerteeinheit 12 übermittelbar. Die Signalverbindungen 7 können als Signalleitungen oder drahtlose Verbindungen ausgebildet sein.

Die Auswerteeinheit 12 verarbeitet alle Wägezellensignale, ermöglicht so die Ermittlung eines Wertes für die Masse des Objektes 10. Dieser Wert für die Masse des Objektes 10 kann an die Ausgabeeinheit 14 durch eine weitere Signalverbindung übermittelbar sein, die als Signalleitung oder drahtlose Verbindung ausgebildet sein kann.

Figur 2 zeigt eine Anordnung von Wägezellen 6.1-6.3 in einer sequenziellen Kaskade. Das nicht dargestellte zu wägende Objekt bewirkt eine entlang der Lotrechten FG auf die Wägezellen 6.1-6.3 wirkende Objektgewichtskraft. Dies ist durch die beispielhafte mechanische Kopplung der Objektaufnahmefläche mit der Kaskade bzw. mit jeder einzelnen Wägezelle der Kaskade erreichbar. Beispielhaft können die Wägezellen 6.1-6.3 entlang einer nicht dargestellten Schiene verschiebbar angeordnet sein.

Zum besseren Verständnis ist eine Funktionsweise einer solchen Kaskade im Folgenden anhand einer steigenden Objektgewichtskraft beschrieben, wie es beispielhaft bei einem kontinuierlich mit einer Flüssigkeit zu befüllendem Gefäßes als zu wiegendem Objekt vorstellbar wäre. Demnach wird die in der Figur 2 oben dargestellte erste Wägezelle 6.1 in Richtung der dargestellt darunter angeordneten Wägezelle 6.2 belastet, das heißt gemäß Figur 2 verschoben, solange der Schwellwert der ersten Wägezelle 6.1 noch nicht erreicht ist. Mit Erreichen des Schwellwertes der ersten alleinig durch die Objektgewichtskraft beeinflussten Wägezelle entspricht die Objektgewichtskraft dem Schwellwert und die erste Wägezelle 6.1 koppelt an die zweite Wägezelle 6.2 an, beispielsweise durch die Verformung der ersten Wägezelle 6.1 mittels mechanischen Kontaktes zur zweiten Wägezelle 6.2. Ein entsprechendes Wägezellensignal der ersten Wägezelle 6.1 entspricht während des weiteren Vorganges des Befüllens des Gefäßes unabhängig der steigenden Objektgewichtskraft dem Schwellenwert.

Im Verlauf des weiteren Befüllens des Gefäßes wird die zweite Wägezelle 6.2 steigend bis zum Erreichen des Schwellenwertes der zweiten Wägezelle 6.2 belastet. Schematisch ist in Figur 2 dargestellt, dass der Schwellenwert der zweiten Wägezelle 6.2 unerreicht ist, das heißt die dritte Wägezelle 6.3 vorerst selbst bei weiterem Befüllen des Gefäßes nicht mit einem Anteil der Objektgewichtskraft belastet oder belastbar ist. Folglich ergäbe sich gemäß Figur 2 ein Wert der Objektgewichtskraft, welcher größer als der Schwellenwert der ersten Wägezelle 6.1 und kleiner als die Summe der Schwellenwerte der ersten und zweiten Wägezellen 6.1, 6.2 ist. Demnach sind die den Wägezellensignalen entsprechenden Anteile der Objektgewichtskraft zu addieren, um die konkrete Masse des Objektes ermitteln zu können.

Die für die Wägevorrichtung größtmöglich messbare Masse eines Objektes ergibt sich somit aus der Summe der Schwellenwerte aller Wägezellen 6.1-6.3 der Kaskade.

Figur 3 zeigt eine schematische Darstellung der von Wägezellen 6.1-6.4 einer Wägevorrichtung detektierten Objektgewichtskraft S in Abhängigkeit von der Objektmasse m. Die Werte auf sind beispielhaft in Kilogramm angegeben. Gemäß dargestelltem Diagramm weist jede der Wägezellen 6.1-6.4 einen identisch gewählten Schwellenwert S₁ entsprechend der Objektmasse von fünf Kilogramm auf, wobei die Wägezellen 6.1-6.4 in einer Kaskade angeordnet sind. Entsprechend wird die Kaskade der Wägezellen 6.1-6.4 so belastet, dass ausschließlich eine erste dieser Wägezellen 6.1 ein Wägezellensignal ausgibt, sofern die durch die Wägevorrichtung zu wiegende Objektmasse fünf Kilogramm nicht überschreitet. Die verbleibenden Wägezellen 6.2-6.4 geben im Fall einer zu wiegenden Objektmasse bis zu beispielsweise 5 kg kein einen Anteil der Objektgewichtskraft S repräsentierendes Wägezellensignal aus.

Demnach ist durch eine zweite Wägezelle 6.2 ein Wägezellensignal generierbar, wenn die Objektmasse m zum Beispiel 5 kg überschreitet. Das durch die erste Wägezelle 6.1 generierte Wägezellensignal entspricht dem Schwellenwert S bzw. verharrt bei diesem Schwellenwert S, sollte die durch das Objekt bewirkte Objektgewichtskraft größer oder gleich des Schwellenwertes S der ersten Wägezelle 6.1 sein bzw. werden.

In analoger Weise wird durch die zweite Wägezelle 6.2 ein entsprechend ihres Schwellwertes S und durch die dritte Wägezelle 6.3 Wägezellensignale generiert, wenn die Objektmasse m zum Beispiel 10 kg überschreitet. Wenn die Objektmasse m zum Beispiel 15 kg überschreitet, werden durch jede der in der Kaskade unmittelbar nacheinander beeinflussten Wägezellen 6.1-6.3 entsprechend ihrer Schwellenwerte S generierte Wägezellensignale generiert und die vierte Wägezelle 6.4 generiert ein der vierten Wägezelle 6.4 zuordenbares Wägezellensignal, welches dem ihr zugeordneten Anteil der Objektgewichtskraft entspricht.

Weist die Wägevorrichtung 2 demnach drei baugleiche Wägezellen 6.1-6.3, denen jeweils ein Schwellenwert zugewiesen ist, der der Masse von 6 kg entspricht, ist durch die zwei in der Kaskade erstbeeinflussten Wägezellen 6.1, 6.2 jeweils ein Wägezellensignal entsprechend ihres Schwellenwertes von zum Beispiel 6 kg generierbar. Darüber hinaus ist durch die dritte Wägezelle 6.3 ein Wägezellensignal entsprechend zum Beispiel 1 kg generierbar.

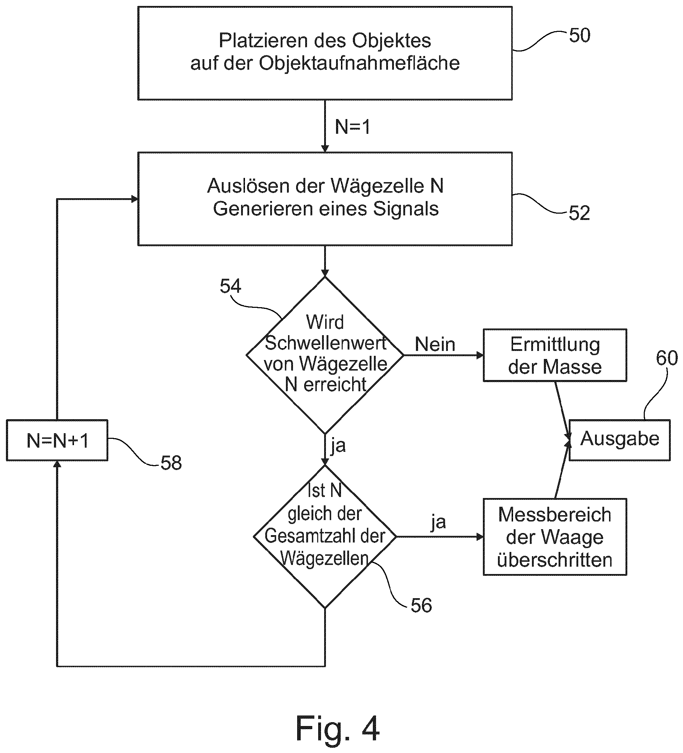

Figur 4 zeigt die Funktionsweise einer solchen Wägevorrichtung 2 in einem Blockdiagramm.

In einem ersten Schritt 50 wird das zu wägende Objekt auf der Objektaufnahmefläche platziert. Dies bewirkt eine mechanische Beeinflussung mindestens einer ersten der Wägezellen durch die Kopplung aller Wägezellen mit der Objektaufnahmefläche. Folglich wird ein Wert N gleich 1 gesetzt, wobei N für die Anzahl der Wägezellen steht, die das Messergebnisses zur Ausgabe in der Ausgabeeinheit 14 beeinflussen.

In einem zweiten Schritt 52 wird durch die N-te Wägezelle ein der N-ten Wägezelle zuordenbares N-tes Wägezellensignal erzeugt oder ist erzeugbar. Bis zum Entfernen des Objektes von Objektaufnahmefläche bleibt die Belastung der N-ten Wägezelle bestehen, so dass gemäß dem Aufbau der Wägezellenanordnung beispielhaft in einer sequenziellen Kaskade die N-te Wägezelle das ihr zugeordnete Wägezellensignal generieren kann.

Wird der Schwellenwert der N-ten Wägezelle nicht erreicht, ist das Ergebnis eines dritten Schrittes 54, dass die Ermittlung der Objektmasse innerhalb der Auswerteeinheit anhand der N-ten Wägezelle zu erfolgen hat. Wird der Schwellenwert hingegen erreicht, wird in einem vierten Schritt 56 geprüft, ob N gleich der Anzahl der verfügbaren Wägezellen n ist. Ist N gleich der Anzahl der verfügbaren Wägezellen n, ist die Objektmasse nicht durch die Wägevorrichtung in der gegebenen Konstitution ermittelbar. Falls diese Möglichkeit besteht, ist eine Erhöhung mindestens eines zu einer dieser Wägezellen zuordenbaren Schwellenwertes vorzunehmen, was eine Ermittlung der Objektmasse ermöglicht.

Ist N geringer als die Anzahl der in der Wägevorrichtung in einer Kaskade anordenbaren Wägezellen, wird in einem fünften Schritt der Wert von N um einen vorgegebenen Wert, beispielhaft "1" erhöht. Folgend wird der Vorgang ab dem zweiten Schritt 52 erneut durchlaufen.

Wie ausgeführt, besteht ausgehend vom vierten Schritt 56 die Möglichkeit, dass die Objektmasse aufgrund Überschreitung eines Messbereiches der Wägevorrichtung nicht ermittelbar ist. Folglich kann dies als Ergebnis der Messung im abschliessenden Schritt 60 durch die Ausgabeeinheit ausgegeben werden. Beispielhaft kann auf einer als Ausgabeeinheit ausgebildeten Anzeige der Schriftzug "Messbereich überschritten" eingeblendet werden.

Zudem kann ausgehend vom dritten Schritt 54 die Objektmasse durch Auswertung der N Wägezellensignale ermittelt und an die Ausgabeeinheit 14 übermittelt werden. Die Ausgabeeinheit 14 kann die ermittelte Objektmasse an einen Benutzer ausgeben oder weitervermitteln.

## Patentansprüche

1. Wägevorrichtung (2) mit
- einer Objektaufnahmefläche (4) zum Platzieren eines zu wiegenden Objektes (10), wobei eine einer Masse des Objektes (10) entsprechende Objektgewichtskraft auf die Objektaufnahmefläche (4) übertragbar ist, und
- mehrere mit der Objektaufnahmefläche gekoppelte Wägezellen (6.1, 6.2), wobei eine erste der Wägezellen (6.1) einen Schwellenwert aufweist, durch welchen Schwellenwert eine von der den Schwellenwert aufweisenden Wägezelle (6.1) maximal zu verarbeitende Gewichtskraft vorbestimmbar ist, und wobei eine zweite der Wägezellen mit einem über den Schwellenwert hinausgehenden Anteil der Objektgewichtskraft beaufschlagbar ist.

2. Wägevorrichtung nach Anspruch 1, wobei die Wägezellen eine sequenzielle Kaskade bilden.

3. Wägevorrichtung nach einem der vorhergehenden Ansprüche, wobei jede der Wägezellen einen separaten solchen Schwellenwert aufweist.

4. Wägevorrichtung nach einem der vorhergehenden Ansprüche, wobei durch eine jede der Wägezellen ein Wägezellensignal generierbar ist und die Wägezellensignale an eine Auswerteeinheit zur Ermittlung der Masse des Objektes übermittelbar sind.

5. Wägevorrichtung (2) nach Anspruch 4, wobei ein die Masse des Objektes repräsentierendes Gesamtsignal von der Auswerteeinheit an eine Ausgabeeinheit übermittelbar ist.

6. Wägevorrichtung nach einem der vorhergehenden Ansprüche, wobei der Schwellenwert der Wägezelle bzw. der Wägezellen in einem Bereich von 30 Newton bis 70 Newton vorbestimmbar ist.

7. Verfahren zum Reduzieren von Messfehlern umfassend die folgenden Verfahrensschritte:
Platzieren eines Objektes auf einer Objektaufnahmefläche, wobei eine einer Masse des Objektes entsprechende Objektgewichtskraft auf die Objektaufnahmefläche übertragen wird, wobei mehrere Wägezellen mit der Objektaufnahmefläche gekoppelt sind;
Vorbestimmen einer von einer ersten Wägezelle maximal zu verarbeitenden Gewichtskraft durch Festlegen eines Schwellenwertes für die erste Wägezelle (6.1), und
Beaufschlagen einer zweiten der Wägezellen mit einem über den Schwellenwert hinausgehenden Anteil der Objektgewichtskraft.
